# EUROPEAN PATENT APPLICATION

(11) **EP 1 182 493 A1**
(43) Date of publication of application: **27.02.2002**
(21) Application number: 00919185.9
(22) Date of filing: 14.04.2000
(51) Int. Cl.: G02F 1/1339

(54) **LIQUID CRYSTAL DISPLAY**

(30) Priority: 20.04.1999 RU 99108413
(71) Applicant: Optiva, Inc., South San Francisco, CA 94080-1962 (US)
(72) Inventor: LAZAREV, Pavel Ivanovich, Moscow, 119633 (RU)
(74) Representative: Allard, Susan Joyce
(86) International application number: RU0000131
(87) International publication number: WO0063746

(57) **Abstract**

The disclosure pertains to the information displays, in particular liquid crystal displays, and could be used in means of indicatory technology of various purpose, as well as in optical modulators and matrix systems of light modulation, etc.

LC display contains two parallel plates with electrodes and polarizers, which are connected around the periphery while forming a cavity filled with liquid crystal, and the joining of the plates is made detachable.

The main technical result of the disclosed invention is the fact that joining of the plates is performed with ready-made fastening elements, which are formed on the plates beforehand and would not deform during assembly, and therefore do not change their position on the plate - they do not shift, discontinue, nor do they aggressively affect elements of the display during gluing. Besides that, technical result of the disclosed invention is the fact that the fastening elements simultaneously work as the liquid crystal layer thickness limiting elements, which is determined prior to display assembly, and which distinguishes it from the known analogues.

## Description

### BACKGROUND

### Field

The disclosed invention pertains to the information displays, in particular liquid crystal displays, and may be used in means of indicatory technology as well as in optical modulators, matrix systems of light modulation, etc.

### Description of the Related Art

There is a known display implemented as a flat cuvette, formed by two parallel plates, on the inner sides of which there are electrodes made from optically transparent material, for example tin dioxide. The surface of the plates with electrodes is subjected to special processing, which provides the desired uniform orientation of liquid crystal (LC) molecules at the surface of the plates and throughout the volume of the LC layer. Under condition of homogeneous orientation, the major axes of LC molecules are parallel to the directions of orientation, which are usually chosen mutually perpendicular. After assembling the cuvette, it is filled with LC, which forms a layer 1-20µm thick, which is the active medium changing its optical properties (the angle of rotation of the polarization plane) under the influence of an electric field. The change of optical properties is registered in the crossed polarizers, which are usually glued to the outer surfaces of the cuvette. The utilized here polarizers feature low mechanical durability and therefore require special measures to protect them from mechanical damage, which complicates and rises the price of an LC device (L.K. Vistin. JVHO, 1983, vol. XXVI I, ed.2, pp.141-148). One of the methods to protect polarizers from mechanical damage is placing them on the inner sides of the liquid crystal display (US 3941901, 1976).

Drawbacks of the known devices, related to low thermo- and light-resistance, low contrast and other technical characteristics of displays that are determined by the polarizing material, are removed via selecting special materials. However, in all known liquid crystal displays, the assembly (bonding of the plates) yields a large percentage of flawed product, independently of utilized materials and technologies. During formation of the joining seam around the periphery of the display plates, independently of what material is used in the plates - glass, plastic, or other suitable material - there is a possibility of non-uniform distribution of the bonding agent. Excess of the bonding agent may lead to formation of leaks onto the working area of the display this drawback leads to non-hermetic seam and leakage of LC. Besides that, non-uniformities of the bonding agent thickness, in cases when there is no separation distance control between the plates, may lead to misalignment of the plates (plates become no longer parallel), which is also unacceptable and leads to a lower useful product yield. Using various bonding agents and various bonding techniques does not resolve this problem.

There are known ways of solving this problem, where one uses special thermoplastic bonding materials and separation control inserts (EP 0503834, 1996). However, even these bonding elements are not without the mentioned drawbacks. Since the operation of gluing the plates is performed after forming the entire inner structure of the display, and evaluation of the seam quality may be performed only after filling the display with LC, i.e. already after completion of the entire assembly process, improving it, and correspondingly improving the seam itself, becomes critical in LC display production.

### SUMMARY

Technical result of the disclosed invention is the elimination of drawbacks in LC displays caused by the specific implementation of the bonding seam around the periphery of the display plates, as well as an increase of durability of the display, an increase of useful product yield, possibility of second-hand use of plates with already formed functional elements, which leads to an increase of manufacturing efficiency. A possibility emerges, to restore the defective expensive components that are discovered after display assembly.

The main technical result of the invention is the fact that bonding of the plates is performed with the ready-made fastening elements, which are formed on the plates beforehand, and therefore do not deform during the assembly process, and correspondingly do not change their position on the plate - they do not shift, nor do they interrupt and aggressively affect other elements of the display during assembly. Besides that, technical result of the invention is also the fact that fastening elements simultaneously work as controlling the thickness of LC layer, which is determined prior to display assembly, and which distinguishes it from the known analogues. Even when using fastening elements from a thermoplastic material with limiting inserts, one cannot precisely determine the thickness of the thermoplastic material layer on and under the insert. The herein invention provides a possibility to perform display assembly "on the fly", for example using crossing plastic conveyor belts. A special significance has the fact that one may use various materials to implement the fastening elements, which in contrast to many bonding and thermoplastic materials are not aggressive towards functional elements of the display and do not change their properties even under significant increases of temperature.

The mentioned technical result of the invention is achieved by the fact that in the LC display containing two parallel plates with electrodes and polarizers fastened around the periphery while forming a cavity filled with liquid crystal, the plates are fastened detachably.

To create this detachable binding, on the inner surfaces of the plates around their periphery one fixes fastening elements facing each other, which fasten the plates and hermetically seal LC inside the cavity. The fastening elements may be implemented as at least one continuous bonding seam, which is created by a depression on one of the plates and a protrusion on the other with dimensions such as to provide penetration of the protrusion into the depression and a possibility to be fixed in it. The protrusion may have a cross section in the shape of "harpoon" or "swallow's tail". The fastening elements may be implemented in the form of at least one continuous seam, which is created by forming protrusions on both plates having the shape and dimensions which provide a possibility of their mutual locking. In another embodiment, the fastening elements form a bond in the form of "Velcro". Also, fastening elements may be implemented in the shape of discrete fastening contraptions situated on the inner surfaces of the plates around the periphery in at least two rows. Moreover, between the rows of the fastening contraptions one should place a tightening washer.

In another embodiment the fastening elements may be implemented in the shape of coaxial depressions formed on the opposite inner surfaces of the plates, moreover, the shape and the size of depressions are implemented such as to allow bonding the plates with an inserted into the mentioned depressions elastic gasket cord and/or a ribbon with corresponding shape and dimensions.

The plates of the display may be made out of glass or plastic, for example lavsan or other material designed for their fabrication; moreover, both plates may be made out of the same or different materials. On the inner sides of at least one of the plates one may form an orienting texture. Textures of the two plates may be oriented either mutually parallel or at an angle to each other. Here, the amplitude, the period and porosity of texture elements may be chosen in correspondence with the size of the display such as to provide orientation of polarizer's molecules in the presence of the alignment layer as well as without it, and/or to provide uniform distribution of LC layer throughout the volume of the cavity, and to provide the desired thickness of the LC layer. On the inner surface of at least one of the plates one may implement thickness limiters - spacers, which are situated around the periphery of the plates, in this case the role of the spacers may be played by the fastening elements. Also, on the inner surface of at least one of the plates one may implement the thickness limiters - spacers, which are distributed over the area of the plate; in this case they may have the shape of a singular point-elements, which also may serve as additional fastening elements, for example in the form of buttons, or in the shape of a grid, or linear fragments, or a figured texture distributed over the volume of the cavity. To provide additional locking and prevent "stretching" of the fastening elements, the plates may be additionally fastened with external fasteners, for example bolts or brackets. To inject liquid crystal into the display one may use a window in the layer of the detachable seam and/or a window in one of the plates of the display, which is hermetically sealed after injection of liquid crystal.

The display may be of reflecting type. Here, electrodes and one of the display's plates should be made out of an optically transparent material, while the second plate has diffusely reflective layer, which may comprise the system of electrodes of this plate. Moreover, between the diffusely reflective layer and the liquid crystal or between the liquid crystal and the polarizing layer there may be a birefringent layer. On at least one of the plates there may be an isolating sub-layer.

The display may be of transmitting type with plates and functional elements made out of optically transparent material.

Assembly of displays with plastic plates may make use of plastic belts with electrodes, display layers and fastening elements formed beforehand and/or in the process of their translation. Plastic belts are translated in mutually perpendicular directions and fastened by overlapping corresponding fastening elements via pressure, after which they are divided into separate displays.

### DRAWINGS

The present disclosure is illustrated by the enclosed drawings of which:
Figure 1 illustrates the position of the connecting seam around the periphery of the display's plates.
Figure 2 illustrates an embodiment of fabricating fastening elements in the form of two binding seams.
Figure 3 presents an LC display where the binding seam is implemented in the form of two rows of discrete binding contraptions with sealing gasket between the rows.
Figure 4 presents LC display with an additional external binding.
Figure 5 presents various cross sections along A-A of the binding seam according to the disclosure.
Figure 6 schematically illustrates a possible variant of conveyor method of fabrication of displays.

### DETAILED DESCRIPTION

Examples of the embodiments of the detachable binding of the plates in an LC display according to the disclosure can be described in detail with reference to item numbers illustrated in the figures.

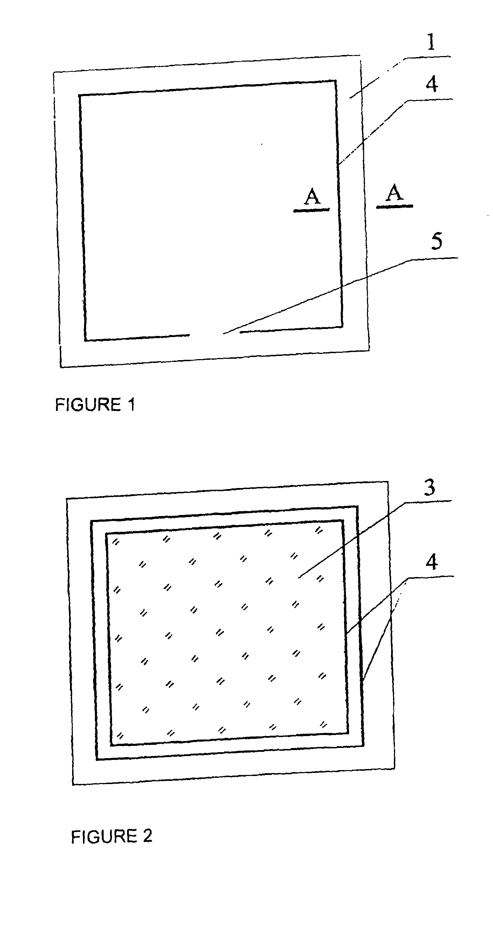

As illustrated in the fig.1, LC display is formed with two plates 1 and 2, which may be made out of glass, plastic, lavsan or other material utilized for their fabrication; moreover, the plates may be made out of the same of different materials. To inject liquid crystal 3 into the cavity between the plates and the fastening elements forming the binding seam 4, one uses specially built window, which may be implemented in the binding seam as well as in the periphery part of the working area of the plate.

On the pates, in the working area of the display, there are functional elements, which may be fabricated according to the known recommended designs and technological methods. On the plates, one usually forms electrodes out of optically transparent material, alignment layers, isolating layer and polarizing layers; if needed, one would form a birefringent layer. When building displays of reflecting type, one forms diffusely reflective layer. Either before, or in the process, or after fabricating functional elements on the plates of the display, one fabricates fastening elements of a certain configuration. Usually, fastening elements may be made out of the same material as the plates. Thus, on one of the plates there may be a depression. To fabricate the depression, one may use, depending on dimensions and materials, the known technological methods from mechanical to photolithography using liquid or plasma etching or methods of laser manufacturing. Analogously, protrusions - continuous or discrete - on the surfaces of the plates may be fabricated as by attaching previously made elements, for example by welding, as well as molding them directly on the plate. If a small size of the fastening elements is desired one may use methods of photolithography, spattering, ionic-plasma or laser technology. The main requirement to the fastening elements - they should provide durable hermetic bond between the plates with fabricated functional elements and encase LC. This is achieved via selecting corresponding shape and material, from which they are made.

Figure 2 presents a variant of fabricating fastening elements in the form of two binding seams 4. This variant is used for more durable fastening of the plates. Moreover, in case of disrupted contact in one of the seams, the second one will maintain hermetic bond.

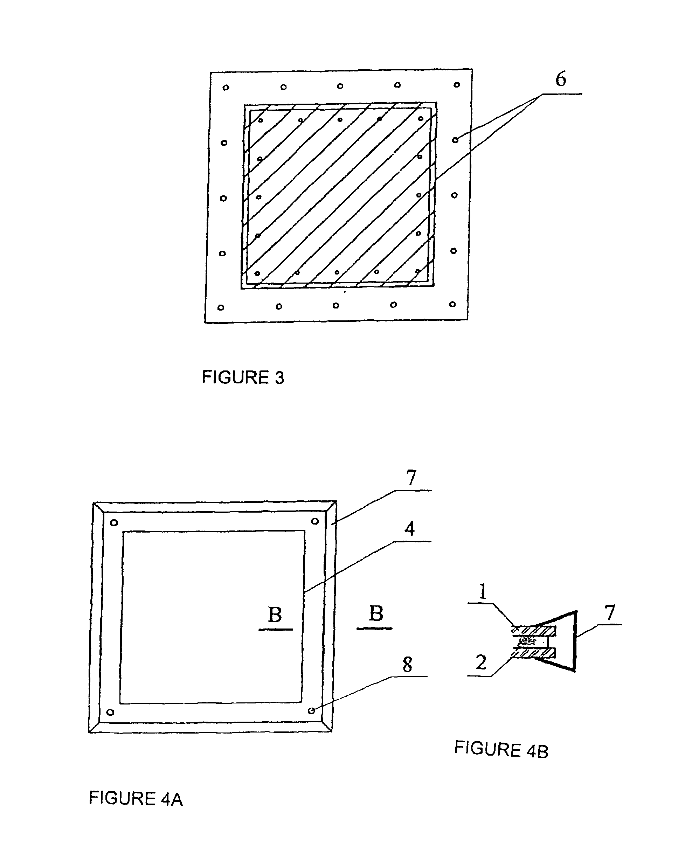

An interesting variant of fabricating LC display is presented in figure 3, which shows fastening elements implemented in the form of discrete elements 6, for example "buttons", at least in two rows. Between the rows of discrete fastening elements one inserts hermetic ribbon. In this case the window 5 for injecting LC into the display is appropriate to implement in the plate itself.

In fabrication of displays of larger size it is appropriate to use additional fastening elements, implemented in the form of external bindings. Figure 4 presents possible variants of additional binding elements. This may be a bracket 7, implemented around the periphery of the display, or bolts 8.

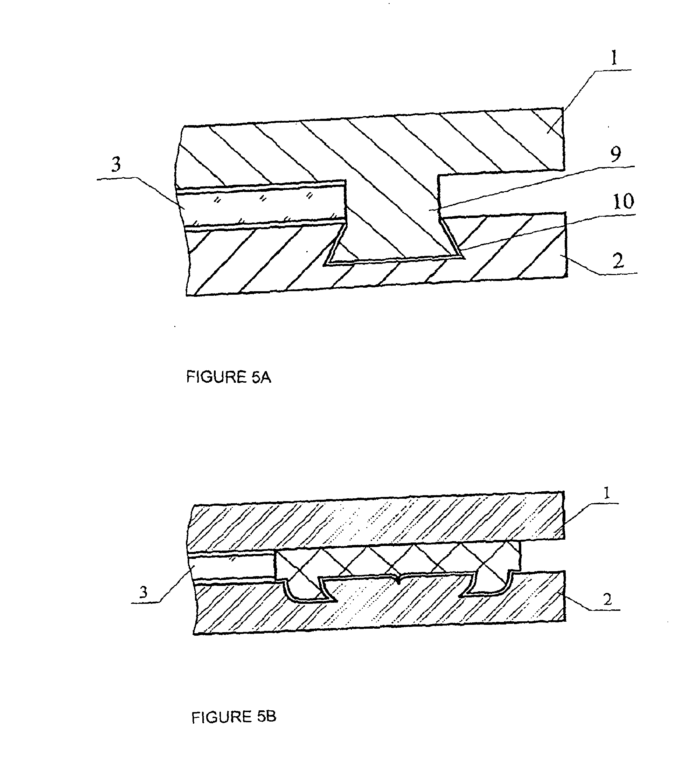

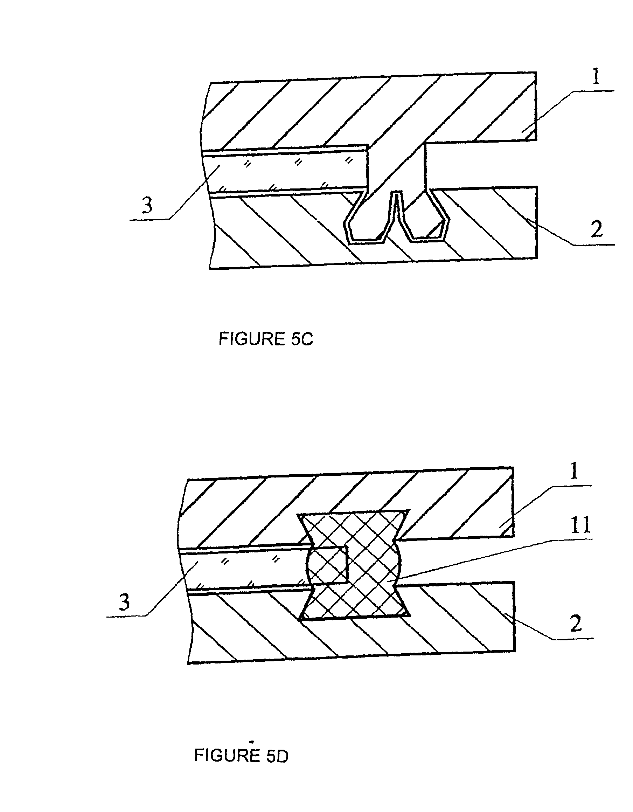

Figure 5 presents various binding elements. Figure 5a presents binding elements in cross section, having the "harpoon" shape. To fabricate these, on one of the plates, one forms protrusions 9, while on the other, opposite to the protrusions, depressions 10. The shape and dimensions of the fastening elements are chosen such as to allow their mutual locking. Figure 5b presents an altered variant of this binding. Figure 5c presents a fastening element having the "swallow's tail" cross-section shape. Figure 5d presents fastening element, to fabricate which one forms depression 10 on the opposite surfaces of the plates. The size and shape of depressions are chosen such as to provide mutual locking of plates by the intermediate elastic cord 11, which is plugged into these depressions in the process of clamping the plates to each other. This variant of binding the plates is usually used in the presence of spacers.

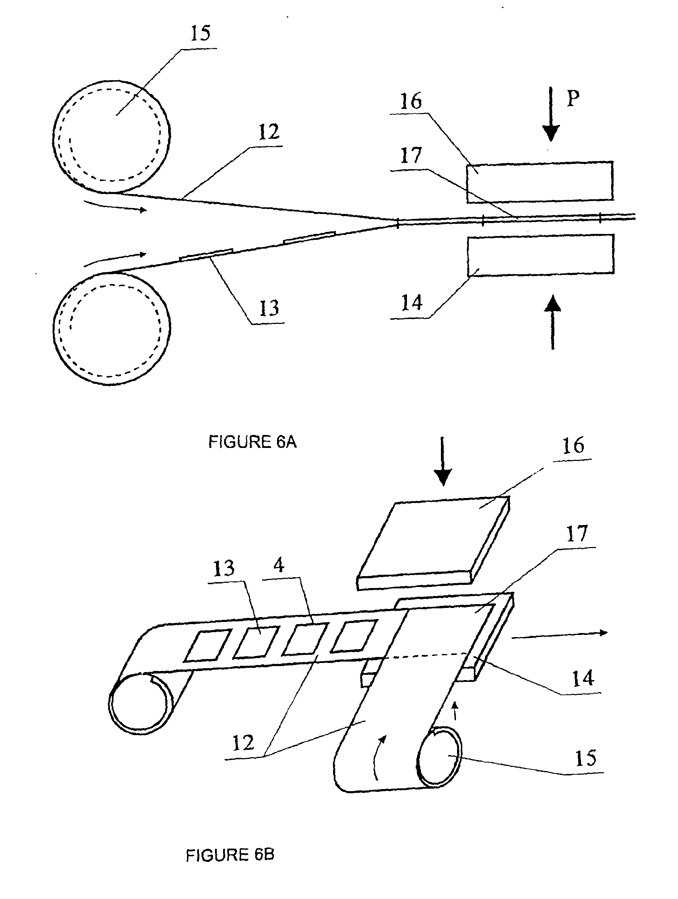

Figure 6 schematically presents conveyor method of fabricating LC plastic displays according to the disclosure. Plastic belts 12 with fabricated elements 13 and bindings forming the seam 4, are supplied parallel to each other onto the working press-table 14. The belts may be supplied directly from the reel with preprocessed intermediate 15 or may be processed during their translation. Functional elements in the display as well as the fastening elements may be fabricated on the belt during its translation. At the time when a portion of one belt is situated in the working table and the opposite portion of the other belt is situated on the upper plateau 16, they are pressed together while controlling superposition of fastening elements. At the time of superposition of the working table and the upper plateau of the press, simultaneously with joining the plates, one may implement separation of the formed display-intermediate 17 via cutting out the corresponding portions of belts. The intermediates are then placed in a stack situated along the direction of movement of one of the belts.

One of the last operations of LC display assembly is the operation of filling the cavity with liquid crystal. As it has been mentioned above, in order to inject liquid crystal into the cavity one uses a window in the joining seam and/or in the plate of the display - usually in the periphery of the working area. After filling the cavity with LC, the window is sealed with a material used specifically for this purpose according to a known technology. Assembly of LC displays of the suggested design can be demonstrated with the following example.

Plastic plates with electrodes, alignment layer or polarizer, a layer of dye and other functional layers and fabricated around the perimeter fastening elements, are washed, dried, rubbed at a certain angle to onset a certain molecular orientation of LC, if it is necessary, and equipped with spacers to provide the necessary gap size between the plates. After that the plates are superimposed on each other in such a way that the fastening elements situated on the different plates would join together. For example, if the fastening contraption has the shape of "swallow's tail", then the figured groove on one of the plates should be joined with the figured protrusion on the other plate. Both plates are joined via application of pressure onto both plates starting from one edge of the cuvette and proceeding over to the other edge of the cuvette. This pressure may be created via passing the joined plates between two rollers with elastic surface and certain firmness. At the time of joining the display's plates, which are insensitive to temperature impacts, one may implement heating of fastening elements of one of the plates. Creating temperature gradient during latching the plates will increase binding efficiency due to tighter interconnection of the fastening elements after cooling. To provide a more reliable hermetic seam, prior to joining the plates one could inject a liquid sealant into the groove, which would later harden chemically, thermally or under UV, IR or visible light; moreover, this hardening may be triggered after inspection of the cuvette for defective elements. Filling the cuvette with liquid crystal is performed through the filling window in the cuvette wall or in the joining seam, which is later sealed off. After that, if the cuvette does not have internal polarizers, they are glued on or applied at the desired orientation onto the external sides of the cuvette.

If one discovers removable defects, the plates of the cuvette are separated and washed from the liquid crystal. After that, defective areas are repaired and the cuvette is assembled again.

The method of assembling the cuvette with other fastening configurations generally does not differ. It is also applicable in the continuous fabrication method, where the rear and the front walls of the display are formed on a continuous polymer belt. During assembly, both belts are rolled between two rollers such that the figured protrusions of one belt would fit into the corresponding figured grooves of the other belt.

All the designs of LC displays, despite their variety, do not deplete the possible arrangements determined by the claims of the disclosed invention. Moreover, the principles of operation of display do not change. Utilization of detachable fastening of plates in LC displays is vividly illustrated in figures and text. From the above follows, that the disclosed invention implements the declared purpose providing the mentioned above technical result.

## Claims

**1.** LC display containing two parallel plates with electrodes and polarizers joined along their periphery and forming a cavity filled with liquid crystal, wherein the joining of the plates is implemented as detachable.

**2.** LC display according to claim 1, wherein to create detachable joining of the plates one forms fastening elements around the periphery on the inner surfaces of the plates facing each other, which provide locking of the plates with each other and sealing-in the LC.

**3.** LC display according to any of the claims 1-2, wherein the fastening elements are implemented in the form of at least one continuous binding seam, to create which one forms a depression on one of the plates and protrusion on the other with dimensions and form such as to provide penetration into the mentioned depression and possibility of locking in it.

**4.** LC display according to any of the claims 1-3, wherein the protrusion has cross section in the shape of "harpoon" or "swallow's tail".

**5.** LC display according to any of the claims 1-2, wherein the fastening elements are implemented in the form of at least one continuous joining seam, to create which both plates are equipped with protrusions shaped such as to provide a possibility of mutual locking.

**6.** LC display according to any of the claims 1-2, wherein fastening elements create a joint in the form of "Velcro".

**7.** LC display according to any of the claims 1-2, wherein fastening elements are implemented in the form of discrete binding contraptions siotuated on the inner surfaces around the periphery of the plates, at least in two rows with a tightening gasket situated between the rows of fastening elements.

**8.** LC display according to any of the claims 1-2, wherein fastening elements are implemented in the form of coaxial depressions created on the opposite inner surfaces of the plates, and where the form and shape of the depressions are implemented such as to provide a possibility to join the plates with an elastic gasket cord and/or a ribbon with corresponding dimensions inserted into the mentioned depressions.

**9.** LC display according to any of the above claims, wherein the plates are made out of glass or plastic, for example lavsan or other material designed for their fabrication, and both plates may be implemented out of the same as well as different materials.

**10.** LC display according to any of the above claims, wherein the inner surfaces of at least one of the plates is equipped with an orienting texture.

**11.** LC display according to any of the claim 10, wherein textures on the plates are oriented either at an angle to each other or parallel.

**12.** LC display according to any of the claims 10-11, wherein the amplitude, the period and porosity of the texture elements are chosen in accordance with the display size and so as to provide orientation of polarizer's molecules as in the presence of an alignment layer as well as without it, and/or to provide uniform distribution of LC layer throughout the volume of the cavity to provide the necessary thickness of LC layer.

**13.** LC display according to any of the above claims, wherein the inner surface of at least one of the plates is equipped with thickness limiting elements - spacers, which are situated around the periphery of the plates, and in this case the function of the spacers may be played by the fastening elements.

**14.** LC display according to any of the above claims, wherein the inner surface of at least one of the plates is equipped with thickness limiting elements - spacers, which are distributed over the area of the plate, and in this case they may be in the form of singular point-elements, which may also work as additional fastening elements, as well as in the form of a grid or linear fragments, or figured texture distributed over the entire volume.

**14.** LC display according to any of the above claims, wherein the plates are additionally bound with external fastening elements, for example bolts or brackets.

**15.** LC display according to any of the above claims, wherein in order to fill the cavity with liquid crystal one uses a window in the layer of the detachable joint and/or a window in one of the plates of the display, which is sealed after the filling is complete.

**16.** LC display according to any of the above claims, wherein it is a display of reflecting type, where electrodes and one of its plates are made out of optically transparent material and the second plate is equipped with diffusely reflecting layer, which may comprise a system of electrodes on that plate, and where between the diffusely reflecting layer and liquid crystal or between the liquid crystal and polarizing layer there may be a birefringent layer, while at least one of the plates may be equipped with an isolating sub-layer.

**17.** LC display according to any of the above claims, wherein it is a display of transmitting type with plates and functional elements made out of an optically transparent material.

**18.** LC display according to any of the above claims, wherein assembly of the display makes use of plastic belts already equipped and/or equipped in the process of their translation with electrodes and display layers and fastening elements, and where the plastic belts are translating in mutually parallel or perpendicular directions, and where they are joined by connecting corresponding fastening elements via pressure, after which they are divided into separate displays.
